# EUROPÄISCHE PATENTANMELDUNG

(11) **EP 1 997 662 A2**
(43) Veröffentlichungstag der Anmeldung: **03.12.2008**
(21) Anmeldenummer: 08008659.8
(22) Anmeldetag: 08.05.2008
(51) Int. Cl.: B60J 7/20, B60J 7/185

(54) **Cabriolet-Fahrzeug mit einem in Offenstellung verriegelbaren Dach**

(30) Priorität: 31.05.2007 DE 102007025484
(71) Anmelder: Wilhelm Karmann GmbH, 49084 Osnabrück (DE)
(72) Erfinder: Bunsmann, Winfried, 49143 Bissendorf (DE); Brockhoff, Franz-Ullrich, 49565 Bramsche (DE)

(57) **Zusammenfassung**

Ein Cabriolet-Fahrzeug (1) mit einem Dach (2), das über seitlich Gestängeteile (9) gegenüber einer Fahrzeugkarosserie (4) beweglich gehalten und in seiner abgelegten Offenstellung mittels zumindest einer von einem Dachteil (5;6;7) mit zumindest einer ausgreifenden Halteeinrichtung (15;16) gegenüber der Fahrzeugkarosserie (4) sicherbar ist, wird so ausgebildet, dass die Halteeinrichtung(en) (15;16) allein durch Bewegung von seitlichen Gestängeteilen (9) in oder außer Eingriff bewegbar ist oder sind.

## Beschreibung

Die Erfindung betrifft ein Cabriolet-Fahrzeug mit einem in seiner abgelegten Offenstellung lagesicherbaren Dach nach dem Oberbegriff des Anspruchs 1 oder des Anspruchs 2.

Es ist bekannt, ein in seiner Offenstellung in einem Aufnahmeraum der Karosserie abgelegtes Cabriolet-Dach dadurch zu sichern, dass ein den Aufnahmeraum oberseitig überdeckendes Deckelteil in seiner Schließstellung über seiner Unterseite zugeordnete Niederhalter auf das Dach drückt und dieses damit an einer Bewegung, besonders einer Aufwärtsbewegung beim Überfahren von Fahrbahnunebenheiten, hindert. Bei so genannten Retractable Hardtops (RHT), die lackierte Dachaußenflächen aufweisen, stellt sich die Gefahr von Beschädigungen des Daches, wenn Niederhalter auf diese Dachaußenflächen aufsetzen. Auch bei stoffbezogenen Softtops, bei denen die Niederhalter auf den Stoff drücken, kann es hier zu Verschleiß kommen.

Es ist des weiteren bekannt, ein so abgelegtes Dach, insbesondere bei einer sog. Z-Faltung, bei der ein in Schließstellung am Windschutzscheibenrahmen gehaltenes vorderes Dachende seine gleichartige Orientierung bei offenem und bei geschlossenem Dach in gleicher Weise beibehält, durch ausgreifende Bolzen, die in Eingriffsstellung ein Widerlager der Karosserie untergreifen, gegenüber dieser derart sichern zu können, dass auch bei Überfahren von groben Fahrbahnunebenheiten das Dach nicht in Vertikalbewegung geraten kann. Damit kann das Dach auch dicht unterhalb eines Deckelteils gehalten werden, ohne während der Fahrt Gefahr zu laufen, mit zum Beispiel lackierten Außenteilen von unten an dieses Deckelteil anzuschlagen.

Eine solche Lösung ist in der DE 698 10 193 T2 gezeigt. Dabei ist jedoch für die Bewegung der ausgreifenden Halteeinrichtungen zumindest ein zusätzlicher Antrieb erforderlich, so dass das Gewicht erhöht ist und zusätzliche Teile verbaut werden müssen. Die Kopffreiheit ist durch die Anordnung des Antriebs unterhalb eines vorderen Dachteils reduziert. Des weiteren ist eine eigene Steuerung erforderlich, was den Aufwand weiter erhöht.

Der Erfindung liegt das Problem zugrunde, eine Vereinfachung einer Lagesicherung des geöffneten Daches ohne Einschränkungen ihrer Funktion und unter Vermeidung einer Verschleißgefahr von Bereichen der Dachaußenfläche zu schaffen.

Die Erfindung löst dieses Problem durch ein Cabriolet-Fahrzeug mit den Merkmalen des Anspruchs 1 sowie durch ein Cabriolet-Fahrzeug mit den Merkmalen des Anspruchs 2, die einzeln oder in Kombination mit denen des Anspruchs 1 verwirklicht sein können. Hinsichtlich vorteilhafter Ausgestaltungen und Weiterbildungen der Erfindung wird auf die weiteren Ansprüche 2 bis 13 verwiesen.

Mit der Erfindung ist in der Ausgestaltung nach Anspruch 1 sichergestellt, dass das geöffnete Dach über lagesichernde ausfahrbare Halteeinrichtung(en) verfügt und dennoch kein eigener Antrieb für deren Bewegung erforderlich ist. Durch die Bewegbarkeit der Halteeinrichtung(en) allein durch die bei der Öffnungs- oder Schließbewegung sich bewegenden seitlichen Gestängeteile ergibt sich eine erhebliche Vereinfachung.

In der Ausgestaltung nach Anspruch 2 ist eine einfaches Niederhalten über abwärts weisende Puffer des Deckelteils möglich, ohne dass diese auf lackierte Flächen aufdrücken müssten. Die Niederhalter können auf die gegenüber einem flächigen Dachteil ausfahrbaren Riegel aufdrücken. Eine Lackbeschädigung ist dadurch zuverlässig vermieden.

In Kombination mit Anspruch 1 ist dieser Riegel als Aufstandsfläche für einen Niederhalter ohne eigenen Antrieb beweglich, so dass sich auch hier die geschilderte Vereinfachung ergibt.

Insbesondere kann ein solcher Riegel bei geschlossenem Dach unsichtbar unter einem die Dachaußenfläche bildenden Dachteil gehalten sein. Der Riegel, der auch flächig ausgebildet sein kann, ist dann bei geschlossenem Dach optisch unsichtbar.

Eine besonders gute Sicherung des Daches sieht vor, dass dem vordersten Dachteil eine Halteeinrichtung mit einem nach vorne ausgreifbaren Riegel und eine weitere Halteeinrichtung mit einem nach hinten ausgreifbaren Riegel zugeordnet ist.

Zur exakten Vertikalpositionierung des geöffneten Daches ist jeder Riegel in ausgreifender Stellung auf einem Widerlager der Karosserie aufsetzbar und zur Ausrichtung gegenüber der Fahrzeugquerrichtung in einem Einlaufkanal auf dieses absenkbar.

Eine einfache Steuerung der Halteeinrichtungen ist über solche Gestängeteile möglich, die auf jeder Seite ein Viergelenk mit zwei bei geschlossenem Dach von einer Fensterbrüstungslinie schräg aufwärts ragenden Lenkern umfassen und in dieser Stellung zu einem im wesentlichen horizontal über dem Insassenraum liegenden Dachteil führen.

Die Riegel können dabei jeweils von einem gegenüber einem Lenker des Dachgestänges verschieblichen Steuerkörper bewegbar sein.

Eine zuverlässige Zwangsbewegbarkeit gegenüber dem Lenker ist konstruktiv einfach zu gewährleisten, wenn der Steuerkörper zumindest eine Führungskulisse aufweist, in die ein quer auswärts greifender Führungskörper des Lenkers eingreift.

Eine einstückige Ausbildung von Riegel und Steuerkörper ist dabei besonders einfach.

Wenn das Dach ein Retractable Hardtop (RHT) mit einem bei geschlossenem Dach an einem Windschutzscheibenrahmen verriegelten vordersten Dachteil ist und die Halteeinrichtung(en) dem vordersten Dachteil zugeordnet ist oder sind, ergibt sich eine sehr zuverlässige Sicherung auch eines relativ schweren Daches.

Ein bewegliches Dach für ein Cabriolet-Fahrzeug nach einem der Ansprüche 1 bis 12 ist zusätzlich beansprucht.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: ein erfindungsgemäßes Cabriolet-Fahrzeug in nach vorne abgebrochener, schematischer Seitenansicht bei geschlossenem Dach,
- Fig. 2: eine ähnliche Ansicht wie Fig. 1 bei beginnender Dachöffnung,
- Fig. 3: eine ähnliche Ansicht wie Fig. 2 bei weiter fortschreitender Dachöffnung,
- Fig. 4: einen ähnliche Ansicht wie Fig. 3 in Dachstellung kurz oberhalb seiner geöffneten, abgelegten Lage,
- Fig. 5: eine ähnliche Ansicht wie Fig. 4 bei vollständig abgelegtem Dach,

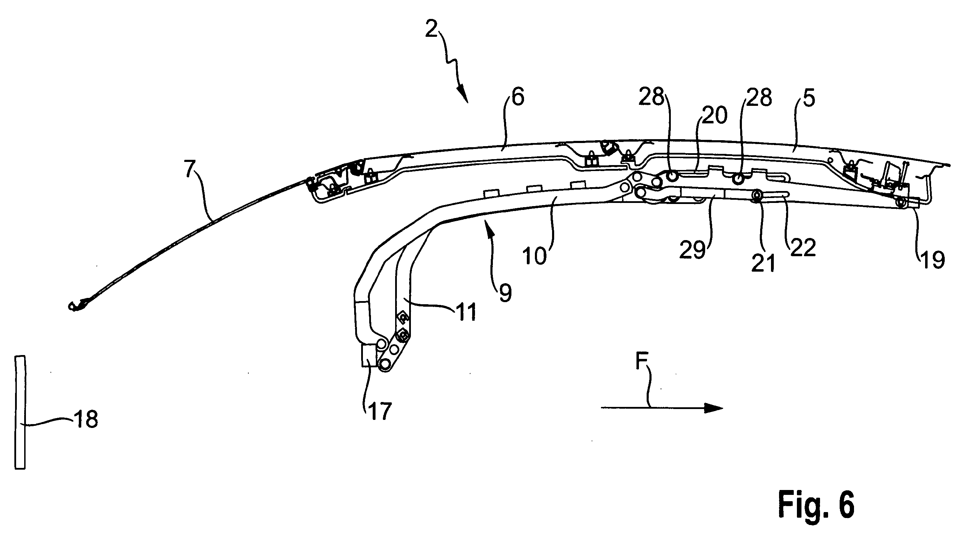

- Fig. 6: das schematisch herausgezeichnete Dach in geschlossener Stellung nach Fig. 1,

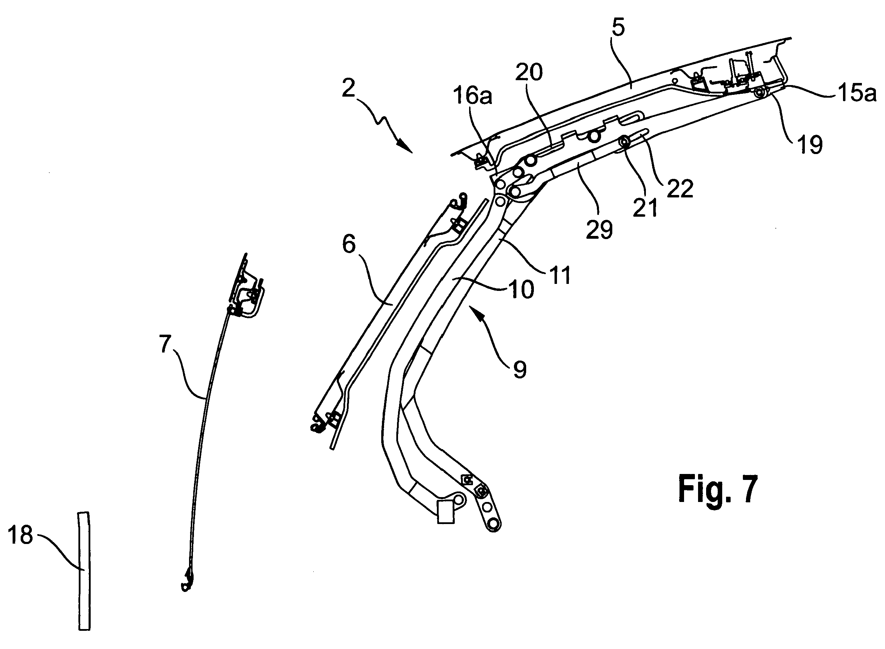

- Fig. 7: eine ähnliche Ansicht wie Fig. 6 während der beginnenden Dachöffnung,
- Fig. 8: eine ähnliche Ansicht wie Fig. 7 während der weiter fortschreitenden Dachöffnung,

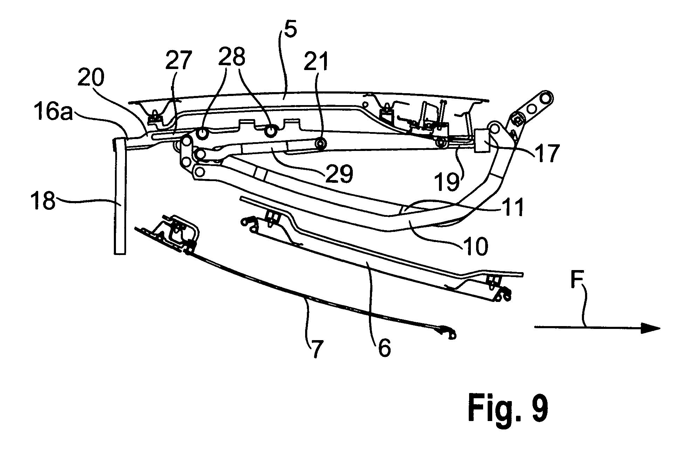

- Fig. 9: eine ähnliche Ansicht wie Fig. 8 in vollständig abgelegter Dachstellung,
- Fig. 10: das schematisch herausgezeichnete Dach in geschlossener Stellung nach Fig. 5 in vom Fahrzeuginnenraum gesehener Seitenansicht,

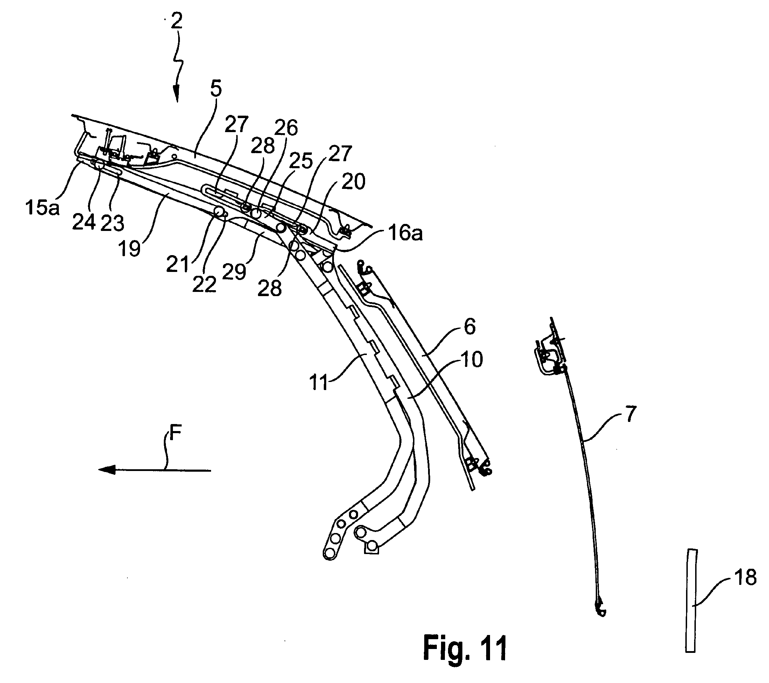

- Fig. 11: eine ähnliche Ansicht wie Fig. 10 während der beginnenden Dachöffnung,

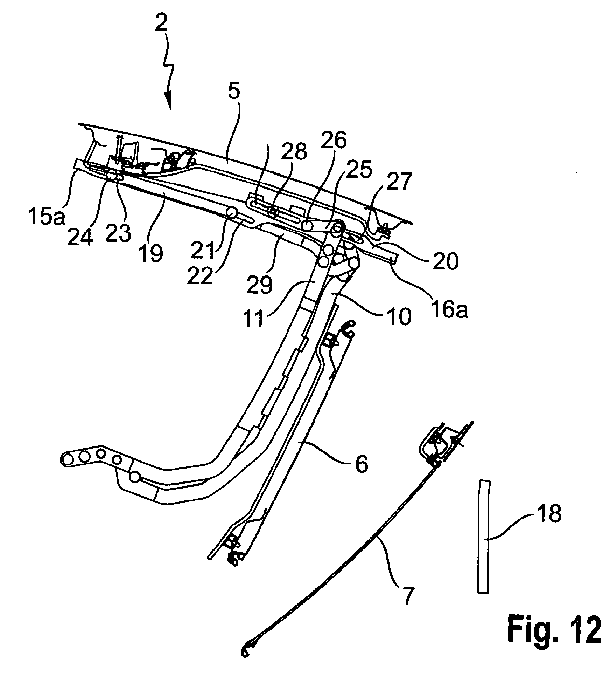

- Fig. 12: eine ähnliche Ansicht wie Fig. 11 während der weiter fortschreitenden Dachöffnung,

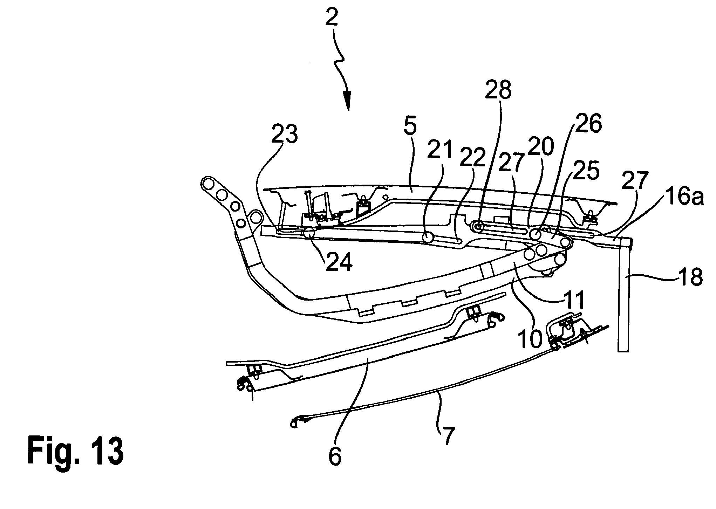

- Fig. 13: eine ähnliche Ansicht wie Fig. 12 in vollständig abgelegter Dachstellung,
- Fig. 14: eine vergrößerte Darstellung des abgelegten und abgestützten Daches in Seitenansicht.

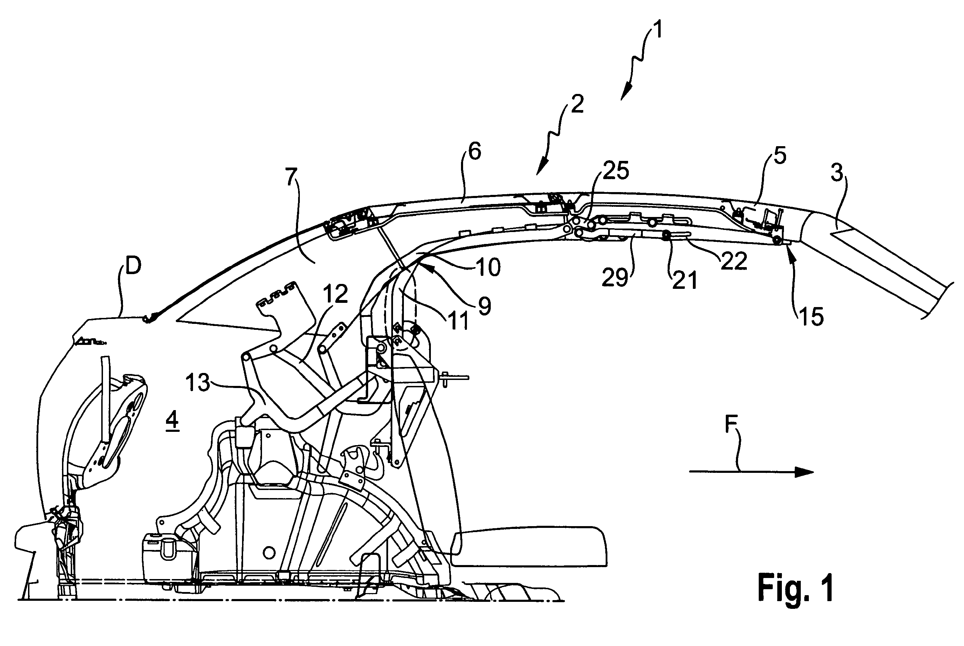

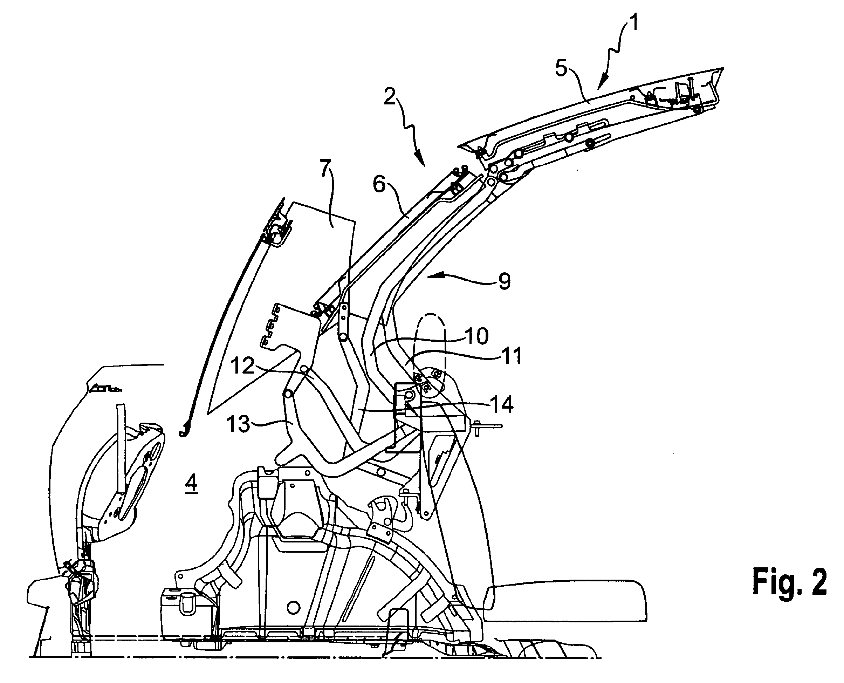

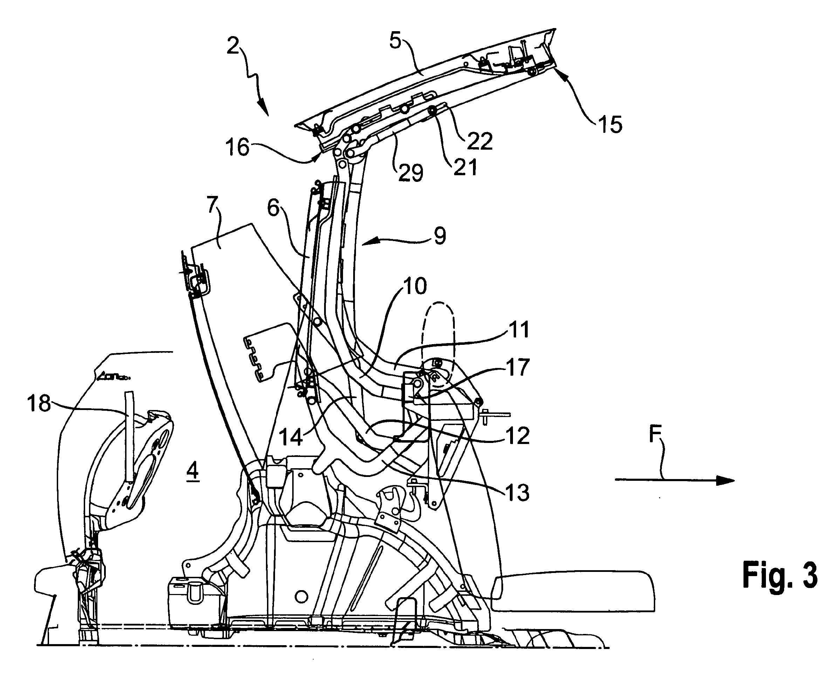

Ein erfindungsgemäßes Cabriolet-Fahrzeug 1 kann mit zumindest einer Rückbank versehen und vier- oder mehrsitzig oder als Zweisitzer ausgebildet sein. Das Dach 2, das in seiner geschlossenen Stellung (Fig. 1) an einem Windschutzscheibenrahmen 3 über Verschlüsse gehalten ist, ist zu seiner Öffnung (Fig. 2 bis Fig. 5) zumindest teilweise heckwärts und abwärts verlagerbar und im hinteren Fahrzeugbereich ablegbar. Hierzu ist eine Eintrittsöffnung in die Karosserie 4 vorgesehen, die zumindest teilweise oberseitig von einem beweglichen Deckelteil D verschließbar sein kann.

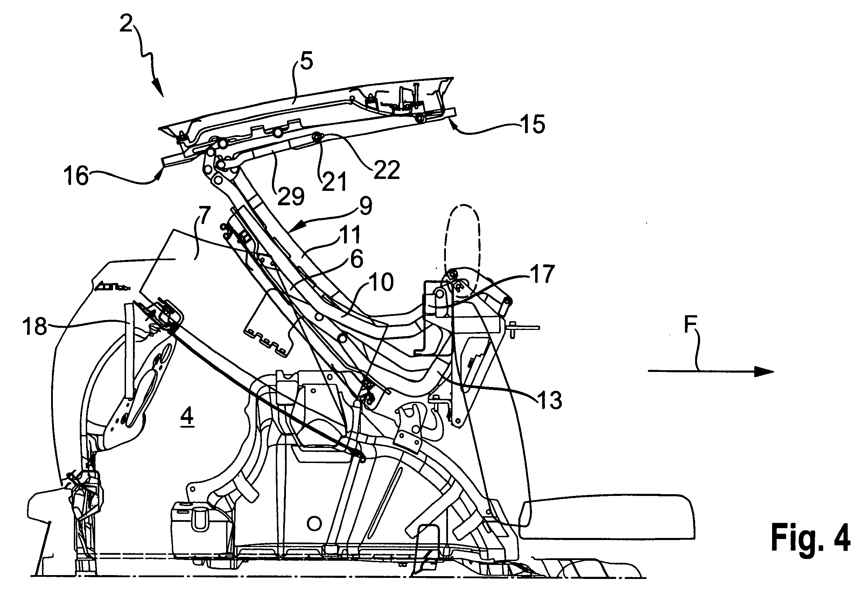

In der zeichnung ist ein sog. Retractable Hardtop (RHT) mit drei aufeinander folgenden und in sich jeweils starren, im wesentlichen plattenförmigen Außenhautteilen 5, 6, 7 dargestellt, was nicht zwingend ist. Das Dach 2 wird gemäß der Zeichnung bei seiner Öffnung in einer sog. Z-Faltung abgelegt (Fig. 4), d. h., dass das vordere, an den Windschutzscheibenrahmen 3 angrenzende Dachteil 5 seine Orientierung beim Dachöffnen beibehält und auch bei geöffnetem, hinten in der Karosserie 4 abgelegtem Dach 2 mit seiner Außenseite nach oben weist.

Das Dach 2 kann alternativ auch ein von einem flexiblen Bezug überspanntes Soft-Top bilden. Es kann in jedem Fall teil- oder insbesondere vollautomatisch zu bewegen sein. Das Dach 2 ist insgesamt über zwei seitliche, sowohl in der Bewegung als auch statisch unterstützende Dachgestänge 9 mit mehreren längs zur Fahrtrichtung F und von der Karosserie 4 zum Dach 2 erstreckten Lenkern 10, 11, 12, 13, 14 gehalten. Die Lenker 10, 11 bilden hier ein erstes Parallelogramm zur Halterung und Bewegung des vordersten Dachteils 5; die Lenker 12, 13 ein zweites Parallelogramm zur Halterung und Bewegung des hintersten Dachteils 7. Das mittlere Dachteil 6 steht hierzu über einen Koppellenker 14 in Wirkverbindung.

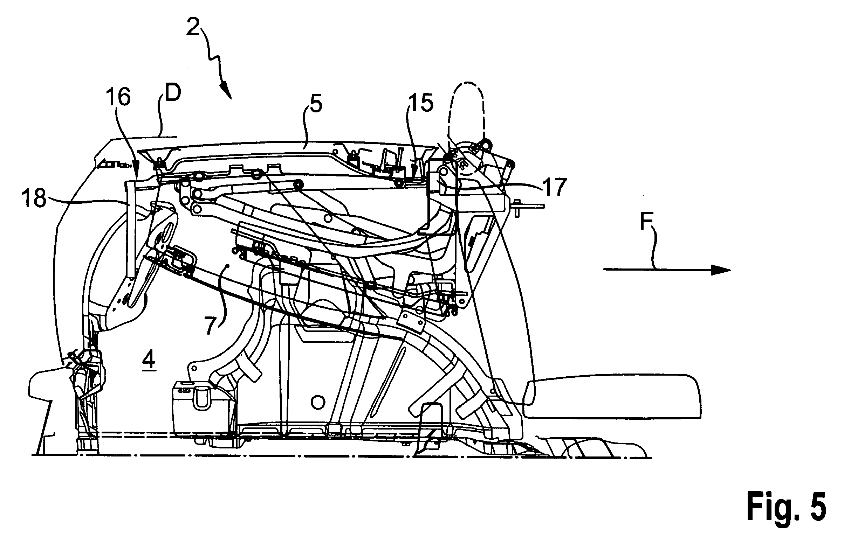

In seiner Offenstellung (Fig. 5) ist das Dach 2 über zumindest eine - hier jeweils bezüglich der Fahrzeugquerrichtung zwei symmetrische - ausgreifende Halteeinrichtungen 15, 16 mittelbar oder unmittelbar gegenüber der Karosserie 4 sicherbar. Damit ist eine Festlegung auch des geöffneten Daches erreicht, so dass dieses z. B. beim Überfahren von Fahrbahnunebenheiten in seiner Position bleibt.

Die Halteeinrichtungen 15, 16 sind hier beispielhaft dem vordersten Dachteil 5 zugeordnet. Die Halteeinrichtung 15 umfasst einen Riegel 15a, der gegenüber dem Dachteil 5 mit einer bezüglich der Fahrtrichtung F nach vorne weisenden Komponente ausfahrbar ist. Die Halteeinrichtung 16 umfasst hingegen einen Riegel 16a, der gegenüber dem Dachteil 5 mit einer Komponente entgegen der Fahrtrichtung F ausfahrbar ist.

Beide Riegel 15a, 16a sind bei geschlossenem Dach 2 in ihrer eingefahrenen Stellung optisch verdeckt unter einem die Dachaußenfläche bildenden Dachteil 5 - oder 6 - gehalten. In ihrer ausgefahrenen Stellung bei geöffnetem Dach 2 sind sie hingegen jeweils auf ein rohbaufestes Widerlager 17 bzw. 18 der Karosserie 4 aufsetzbar.

Jedes Widerlager 17, 18 weist in seinem oberen Bereich als Zentrierungshilfe für den Riegel 15a bzw. 16a einen V-förmig zulaufenden Einlaufkanal auf, wobei die Zentrierungshilfe quer zur Fahrtrichtung F wirksam ist.

Bei geöffnetem Dach sind die vorderen und hinteren Riegel 15a, 16a in den jeweiligen Widerlagern 17, 18 abgelegt. Dann kann ein von dem den Dachaufnahmeraum verschließenden Deckelteil nach unten weisender Niederhalter, der zum Beispiel ein elastisches Pufferelement umfassen kann, von oben auf den jeweiligen Riegel 15a, 16a drücken, um dadurch das Dach 2 in seiner Offenstellung zu sichern. Eine Beschädigung von lackierten Außenbereichen der Dachteile 5, 6, 7 durch die Niederhalter ist dabei zuverlässig ausgeschlossen. An den Riegeln 15a, 16a sind eventuelle Druckspuren durch die Niederhalter unschädlich, da diese Riegel bei geschlossenem Dach unter dem genannten Dachteil 5 bzw. 6 verdeckt gehalten sind.

Sowohl die nach vorne als auch die nach hinten ausgreifenden Halteeinrichtungen 15, 16 sind gemäß dem gezeichneten Ausführungsbeispiel während des Öffnens oder Schließens des Daches 2 allein durch die dabei stattfindende Bewegung der seitlichen Gestängeteile 9 in oder außer Eingriff bewegbar. Damit sind zwangsweise und ohne eigenen Steuerungsaufwand die Halteeinrichtungen 15, 16 bei geschlossenem Dach 2 unter dem vordersten Dachteil 5 gehalten und bei geöffnetem Dach 2 nach vorne bzw. hinten von diesem aus in ihre Eingriffsstellung zu den Widerlagern 17, 18 herausbewegt.

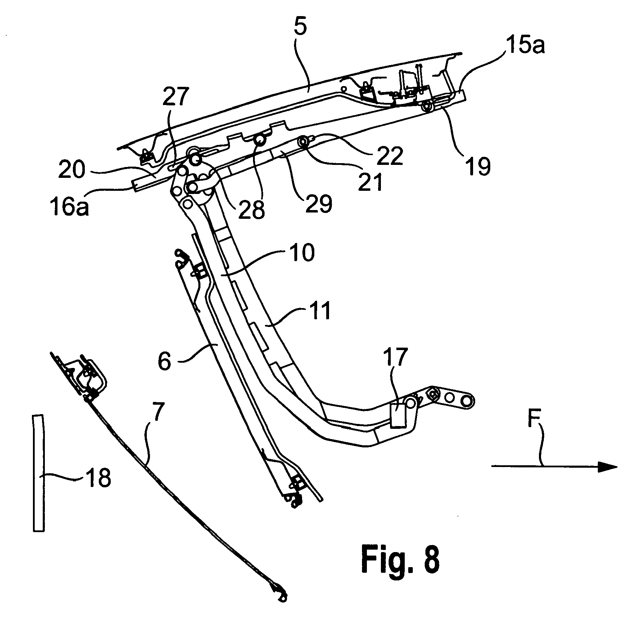

Der vordere Riegel 15a ist hier einstückiger Bestandteil eines verschieblichen Steuerkörpers 19, der ungefähr parallel zum vorderen Dachteil 5 beweglich ist. Ebenso ist der nach hinten ausfahrbare Riegel 16a einstückiger Bestandteil eines weiteren verschieblichen Steuerkörpers 20 (sh. z. B. Fig. 8).

Diese Ein- und Ausfahrbewegung der Steuerkörper 19, 20 gegenüber dem vorderen Dachteil 5 wird durch die Gestängeteile 9 des Daches bewirkt, indem das Viergelenk mit den von der Fensterbrüstungslinie aufragenden Lenkern 10, 11 in seinem oberen Bereich beim Dachöffnen relativ zum vorderen Dachteil 5 sich nach vorne schiebt und dabei die Steuerkörper 19, 20 mitbewegt.

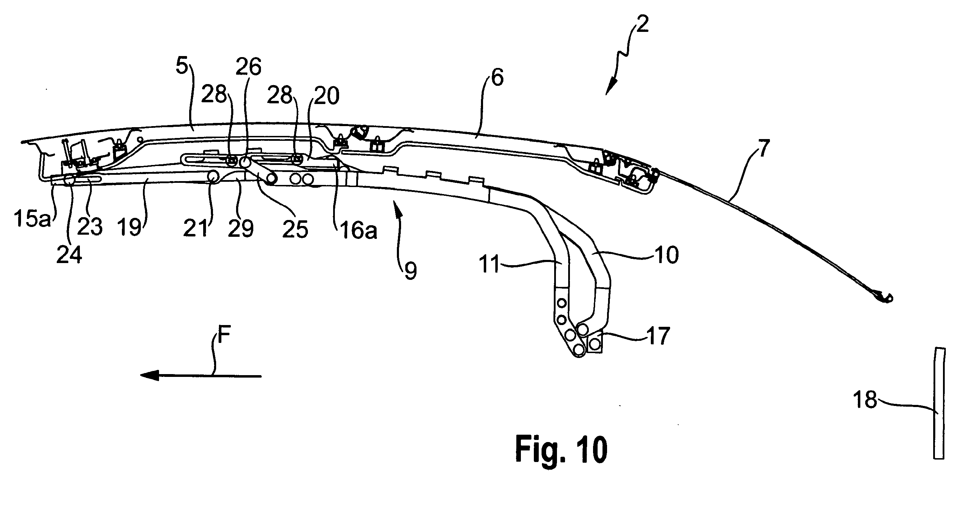

Im einzelnen ist (Fig. 10) zunächst eine Zug-Schub-Stange 29 vorgesehen, die von dem Lenker 11 nach vorne zu einem quer ausgreifenden und bolzenartigen Führungskörper 21 erstreckt ist. Dieser Führungskörper 21 ist in einer dem Dachteil 5 zugeordneten Führungskulisse 22 verschieblich. Zudem weist der Steuerkörper 19 eine Führungskulisse 23 auf, die gegenüber einem zweiten auswärts greifenden Führungskörper 24 des Dachteils 5 verschieblich ist. Dieser quer ausgreifende Führungskörper 24 ist fest gegenüber dem Dachteil 5. Durch den einen beweglichen 21 und den weiteren festen Führungskörper 24 ist eine Parallelverschiebung des Steuerkörpers 19 gegenüber dem Dachteil 5 möglich.

Um umgekehrt den Steuerkörper 20 auszuschieben, ist am oberen Ende des zweiten Lenkers 11 des Parallelogramms ein weiterer Kopplungslenker 25 zur Kraftübertragung vorgesehen. Dieser greift über einen quer ausgreifenden Achsstummel 26 am Steuerkörper 20 an, der seinerseits mit zwei Führungskulissen 27 versehen ist. Darüber ist er durch zwei am Dachteil 5 fest gehaltene und von diesem quer in die Kulissen greifende Führungskörper 28 längsverschieblich an dem Dachteil 5 geführt, so dass er während der Dachöffnung nach hinten ausgeschoben wird und der dann vorragende Riegel 16a über die Fläche des Dachteils 5 vorstehen kann.

Damit sind bei der Dachbewegung zwangsweise mechanische Steuerungen für das Ausfahren der hier zwei Halteeinrichtungen 15, 16 allein durch die Mechanik der Dachbewegung betätigt. Das Ausfahren der Riegel 15a, 16a geht zwangsweise synchron mit der Dachöffnung einher.

Auch eine andere Verlagerbarkeit, zum Beispiel auch mit einer Schwenkkomponente, könnte möglich sein.

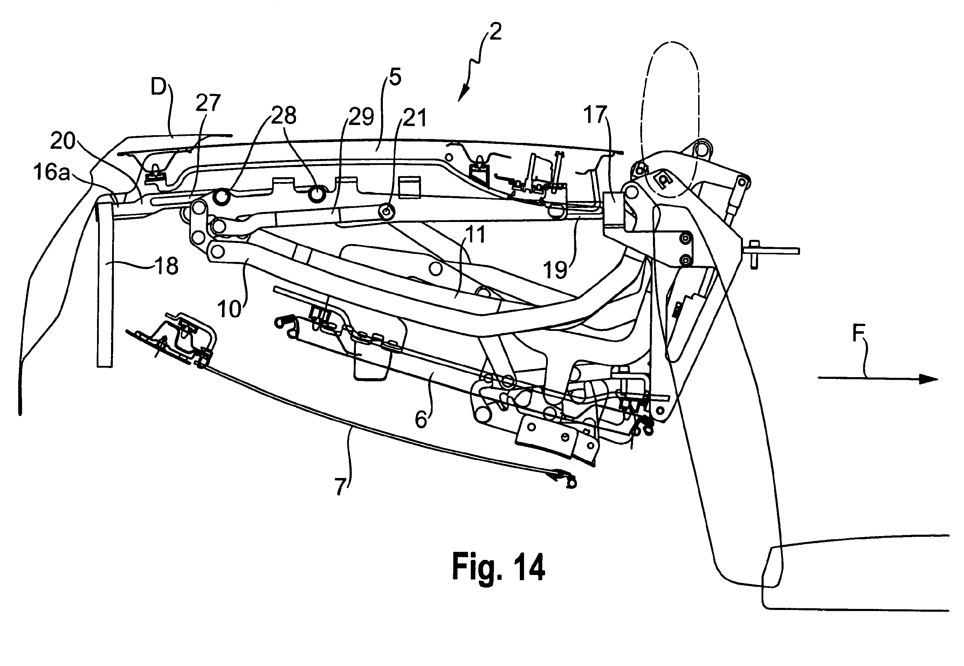

In vollständig abgelegter Dachstellung (z. B. Fig. 14) wird das Deckelteil D über dem abgelegten Dach 2 geschlossen und drückt dann mit den oben beschriebenen Niederhaltern z. B. vor und hinter der oben liegenden Fläche des vorderen Dachteils 5 auf die Riegel 15a, 16a auf, um das Dach 2, das mit seinen Riegeln 15a, 16a in den widerlagern 17, 18 gegen Bewegung nach unten gesichert ist, auch gegen Bewegung nach oben zu sichern.

Das Dach 2 hat dann eine vordere und hintere Lagesicherung und kann nicht mit dem darüber geschlossenen Deckel D kollidieren.

Sämtliche Eingriffs- und Außereingriffsbewegungen der Halteeinrichtung(en) 9 sind daher allein durch den oder die für das Öffnen oder Schließen des Daches 2 ohnehin vorzusehende Mechanik bewirkt.

Ein Funktionstest der Halteeinrichtungen 15, 16 und ihrer Bewegung kann bereits am Dachmodul vor dessen Einsetzen in den Fahrzeugrohbau geprüft werden.

## Patentansprüche

1. Cabriolet-Fahrzeug (1) mit einem Dach (2), das über seitlich Gestängeteile (9) gegenüber einer Fahrzeugkarosserie (4) beweglich gehalten und in seiner abgelegten Offenstellung mittels zumindest einer von einem Dachteil (5;6;7) mit zumindest einer ausgreifenden Halteeinrichtung (15;16) gegenüber der Fahrzeugkarosserie (4) sicherbar ist,
**dadurch gekennzeichnet,**
**dass** die Halteeinrichtung(en) (15;16) allein durch Bewegung von seitlichen Gestängeteilen (9) in oder außer Eingriff bewegbar ist oder sind.

2. Cabriolet-Fahrzeug (1) mit einem Dach (2), das über seitlich Gestängeteile (9) gegenüber einer Fahrzeugkarosserie (4) beweglich gehalten und in seiner abgelegten Offenstellung gegenüber der Fahrzeugkarosserie (4) sicherbar ist, wobei zur Sicherung des geöffneten Daches (2) zumindest eine in oder außer Eingriff verlagerbare Halteeinrichtung (15;16) vorgesehen ist, insbesondere nach Anspruch 1,
**dadurch gekennzeichnet,**
**dass** die oder jede Halteeinrichtung (15;16) einen gegenüber einem flächigen Dachteil (5;6;7) ausfahrbaren Riegel (15a;16a) umfasst, auf den bei geöffnetem Dach (2) ein Niederhalter eines einen Dachaufnahmeraum verschließenden Deckelteils (D) aufdrückbar ist.

3. Cabriolet-Fahrzeug (1) nach Anspruch 2,
**dadurch gekennzeichnet,**
**dass** der Riegel (15a;16a) bei geschlossenem Dach (2) unsichtbar unter einem die Dachaußenfläche bildenden Dachteil (5;6;7) gehalten ist.

4. Cabriolet-Fahrzeug nach einem der Ansprüche 1 bis 3,
**dadurch gekennzeichnet,**
**dass** einem vordersten Dachteil (5) eine Halteeinrichtung (15) mit einem nach vorne ausgreifbaren Riegel (15a) und eine weitere Halteeinrichtung (16) mit einem nach hinten ausgreifbaren Riegel (16a) zugeordnet ist.

5. Cabriolet-Fahrzeug (1) nach einem der Ansprüche 1 bis 4,
**dadurch gekennzeichnet,**
**dass** jeder Riegel (15a;16a) in ausgreifender Stellung auf einem Widerlager (17;18) der Karosserie (4) aufsetzbar ist.

6. Cabriolet-Fahrzeug (1) nach einem der Ansprüche 1 bis 5,
**dadurch gekennzeichnet,**
**dass** dem Widerlager (17;18) ein den Riegel (15a;16a) gegenüber einer Bewegung zu den Fahrzeugquerseiten führender Einlaufkanal zugeordnet ist.

7. Cabriolet-Fahrzeug (1) nach einem der Ansprüche 1 bis 6,
**dadurch gekennzeichnet,**
**dass** die Gestängeteile (9) auf jeder Seite ein Viergelenk mit zwei bei geschlossenem Dach von einer Fensterbrüstungslinie schräg aufwärts ragenden Lenkern (10;11) umfassen, die in dieser Stellung zu einem im wesentlichen horizontal über dem Insassenraum liegenden Dachteil (5) führen, bei Dachöffnung heckwärts und abwärts schwenken und dabei eine mechanische Steuerung für das Ausfahren der zumindest einen Halteeinrichtung (15;16) betätigen.

8. Cabriolet-Fahrzeug (1) nach einem der Ansprüche 1 bis 7,
**dadurch gekennzeichnet,**
**dass** die oder jede Halteeinrichtung (9) einen gegenüber einem Lenker (10;11) des Dachgestänges (9) verlagerbarer Steuerkörper (19;20) zur Verlagerung eines von diesem bewegbaren ausgreifenden Riegels (15a;16a) umfasst.

9. Cabriolet-Fahrzeug (1) nach Anspruch 8,
**dadurch gekennzeichnet,**
**dass** der in Eingriffsstellung vorragende Riegel (15a;16a) einstückig mit dem Steuerkörper (19;20) ausgebildet ist.

10. Cabriolet-Fahrzeug (1) nach einem der Ansprüche 8 oder 9,
**dadurch gekennzeichnet,**
**dass** der Steuerkörper (19;20) längs zu dem jeweiligen Dachteil (5;6) verschieblich ist.

11. Cabriolet-Fahrzeug (1) nach einem der Ansprüche 9 oder 10,
**dadurch gekennzeichnet,**
**dass** der Steuerkörper (19;20) zumindest eine Führungskulisse (22,23;27) aufweist, in die ein quer auswärts greifender Führungskörper (21,24;28) eingreift.

12. Cabriolet-Fahrzeug (1) nach einem der Ansprüche 1 bis 11,
**dadurch gekennzeichnet,**
**dass** das Dach (2) ein Retractable Hardtop (RHT) mit einem bei geschlossenem Dach an einem Windschutzscheibenrahmen (3) verriegelbaren vordersten Dachteil (5) ist und die Halteeinrichtung(en) (15;16) dem vordersten Dachteil (5) zugeordnet ist oder sind.

13. Bewegliches Dach (2) für ein Cabriolet-Fahrzeug (1) nach einem der Ansprüche 1 bis 12.
